# EUROPÄISCHE PATENTANMELDUNG

(11) **EP 0 617 386 A1**
(43) Veröffentlichungstag der Anmeldung: **28.09.1994**
(21) Anmeldenummer: 93250093.7
(22) Anmeldetag: 25.03.1993
(51) Int. Cl.: G07C 15/00, A63F 3/08

(54) **Elektronisches Kleingerät**

(71) Anmelder: Schneider, Philipp J., D-20251 Hamburg (DE)
(72) Erfinder: Schneider, Philipp J., D-20251 Hamburg (DE)
(74) Vertreter: Patentanwälte Wenzel & Kalkoff

(57) **Zusammenfassung**

Um das Einsatzgebiet bisher bekannter, insbesondere kartenförmiger Kleingeräte oder -instrumente durch ein neuartiges elektronisches Funktionselement (1) zu erweitern, umfaßt dieses eine eigene, integrierte Energiequelle, insbesondere Stromversorgung (4), eine Signalaufnahmeeinheit (5) sowie einen mit letzterer und einem Festwertspeicher (2) geschlateten Mikroprozessor (3) zur Aufnahme und Auswertung aufgenommener Signale bzw. Daten mit im Kleingerät (1) abgelegten Basis-, insbesondere Identifikationsdaten. Damit ist ein aktives elektronisches Funktionselement bzw. Kleingerät (1) geschaffen, das Signale aufnehmen und auswerten kann, diese Signale mit einem gespeicherten speziellen Kennzeichen vergleicht und bei übereinstimmung von empfangenem Signal und eigenem Kennzeichen entsprechend Prozesse einleitet und veranlaßt.

## Beschreibung

Die Erfindung betrifft ein leicht handhabbares elektronisches Funktionselement oder Kleingerät, insbesonderes nach Art einer einen Festwertspeicher umfassenden Karte, Kleinplatte od. dgl.

Derartige elektronische Funktionselemente oder Kleingeräte sind in der Praxis als Telefonkarten, Identifizierungskarten, Scheck- und Kreditkarten od. dgl. allgemein bekannt. Zu ihrer Nutzung müssen sie direkt mit einem entsprechenden Gerät verbunden bzw. in dieses eingeführt werden, welches die im Festspeicher abgelegten Informationen erkennt, auswertet und die über ein Programm festgelegten Folgemaßnahmen durchführt bzw. veranlaßt. Diese bekannten Kleininstrumente nach Art von Checkkarten haben sich überaus positiv in der Praxis bewährt, da sie in Herstellung und Nutzung besonders preiswert und einfach sind und sich ihr Anwendungsbereich auf weite Gebiete des allgemeinen Lebens ausgedehnt hat.

Der Erfindung liegt die Aufgabe zugrunde, das Einsatzgebiet bisher bekannter, insbesondere kartenförmiger Kleingeräte oder -instrumente durch ein neuartiges elektronisches Funktionselement zu erweitern.

Diese Aufgabe wird mit einem Funktionselement der eingangs genannten Art dadurch gelöst, daß das Funktionselement eine eigene, integrierte Energiequelle, insbesondere Stromversorgung, eine Signalaufnahmeeinheit sowie einen mit letzterer und dem Festwertspeicher geschalteten Mikroprozessor zur Aufnahme und Auswertung aufgenommener Signale bzw. Daten mit im Kleingerät abgelegten Basis-, insbesondere Identifikationsdaten umfaßt. Somit wird ein aktives elektronisches Funktionselement bzw. Kleingerät geschaffen, das Signale aufnehmen und auswerten kann, diese Signale mit einem gespeicherten speziellen Kennzeichen vergleicht und bei Übereinstimmung von empfangenem Signal und eigenem Kennzeichen entsprechende Prozesse einleitet und veranlaßt.

Dazu kann im Funktionselement nach Art eines integrierten Funktionsbausteines zusätzlich eine Signalabgabekomponente, z.B. eine Meldeeinrichtung integriert sein, die bei zumindest teilweiser Übereinstimmung des von der Signalaufnahmeeinheit empfangenen und vom Mikroprozessor ausgewerteten Signals mit dem gespeicherten Basis- bzw. Identifikationskennzeichen ein Signal erzeugt. Somit ist dem Benutzer des Kleingerätes unverzüglich mitgeteilt, daß das gesendete Signal mit der im Kleingerät abgelegten bzw.integrierten Kennzeichnung übereinstimmt.

Um das erfindungsgemäße Kleingerät zur Ermittlung von Gewinnern z.B. während Fernsehspielen oder -shows einzusetzen, kann es drahtlos von einem Fernsehgerät gesendete akustische Signale über die als piezo-elektrisches Element ausgebildete Signalaufnahmeeinheit empfangen sowie die empfangenen Signale dem Mikroprozessor zuleiten und dieser die empfangenen, gegebenenfalls codierten Signale mit den gespeicherten Basis- bzw. Identifikationsdaten oder -kennzeichen vergleichen und bei zumindest teilweiser Übereinstimmung des empfangenen Signals mit jenen über das gleichzeitig als Meldeeinrichtung fungierende piezo-elektrische Element ein akustisches Signal erzeugen. Durch ein gleichzeitig als Signalaufnahmeeinheit und Melderichtung fungierendes piezo-elektrisches Element ist ein besonders preiswertes elektronisches Kleingerät geschaffen, das ohne direkte Verbindung mit einem Fernsehapparat die von diesem gesendeten akustischen Signale empfangen und auswerten kann. Bei Übereinstimmung von Signal und Identifikationskennzeichen erhält der Benutzer des Kleingerätes ein akustisches Signal über das piezo-elektrische Element, wodurch er informiert wird, daß er nach Art einer "Los-Ziehung" einen Treffer gezogen hat.

Um zu erreichen, daß sich nur Inhaber von Funktionselementen, deren Identifikationskennzeichen mit dem gesendeten Signal übereinstimmt, als Gewinner ausgeben können, kann die Meldeeinrichtung eine Information, wie z.B. eine Telefonnummer abgeben, die es allein dem tatsächlichen Gewinner ermöglicht, seinen Gewinn der jeweils richtigen Stelle bekanntzugeben.

Besonders preiswert, bequem zu handhaben und zu lagern ist ein erfindungsgemäßes Kleingerät dann, wenn es als Checkkarte ausgebildet ist.

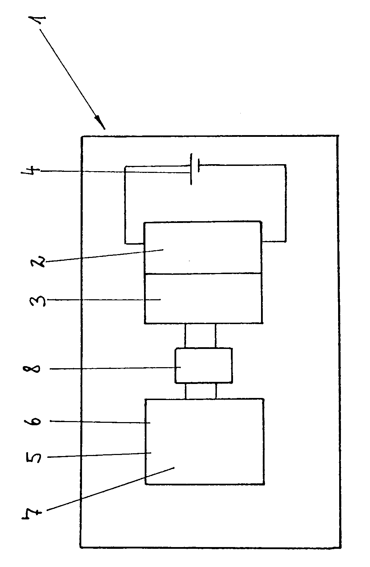

Weitere Vorteile und Ausführungsformen oder -möglichkeiten der Erfindung gehen aus der folgenden Beschreibung des in der schematischen Zeichnung dargestellten Ausführungsbeispieles hervor. Die Figur zeigt ein Blockbild eines nach Art einer Checkkarte ausgebildeten elektronischen Funktionselementes.

Das erfindungsgemäße Funktionselement oder Kleingerät 1 umfaßt einen Festwertspeicher 2, einen mit diesem gekoppelten Mikroprozessor 3, eine eigene Stromversorgung 4 sowie ein gleichzeitig als Signalaufnahmeeinheit 5 und Meldeeinrichtung 6 fungierendes piezo-elektrisches Element 7. Zur besseren Auswertung der empfangenen und gesendeten Signale kann das Kleingerät 1 zusätzlich einen Verstärker 8 umfassen. Jedes Kleingerät 1 enthält ein in der Elektronik gespeichertes, spezielles, in der Regel nur einmal vergebenes Identifikationskennzeichen und ist als aktives Element in der Lage, Signale zu empfangen, auszuwerten und mit dem eigenen Identifikationskennzeichen zu vergleichen sowie bei Übereinstimmung von empfangenem Signal und abgelegtem Identifikationskennzeichen ein Signal, speziell ein akustisches oder optisches Signal, über das piezo-elektrische Element 7 an den Nutzer des Kleingerätes zu geben.

Das erfindungsgemäße Kleininstrument 1 kann insbesondere im Bereich der Fernsehwerbung und Zuschauerinteraktion verwendet werden, wobei das Kleingerät 1 in Form eines Checkkarten-Rechners von Kunden erworben oder von Firmen, die damit werben wollen, an ihre Kunden verteilt wird. Dazu ist vorgesehen, daß das erfindungsgemäße Kleingerät ohne direkte elektrische oder elektronische Verbindung in den Bereich des Lautsprechers eines Fernsehgerätes gelegt wird. Sollen nun in einer Fernsehsendung ein oder mehrere Gewinner von Werbegeschenken, Reisen od. dgl. ermittelt werden, wird vom Sender über dessen Ton-Kanal ein Signal in Form einer Tonfolge ausgesendet, das in verschlüsselter Form ein Identifikationskennzeichen enthält. Alle erfindungsgemäßen Kleingeräte 1, die diese Tonfolge aus dem Lautsprecher des Fernsehgerätes aufnehmen, decodieren das übermittelte Signal und vergleichen es mit dem in dem Kleingerät 1 abgelegten Identifikationskennzeichen bzw. dessen Basisdaten. Der Ton aus dem Fernsehgerät wird dabei vom piezo-elektrischen Element 7 aufgenommen. Bei Übereinstimmung des gesendeten Signals mit dem jeweiligen Identifikationskennzeichen, wird über das piezo-elektrische Element 7 ein akustisches Signal abgegeben, das dem Karteninhaber anzeigt, daß er z.B. gewonnen hat. Dieser kann nun zum Beispiel per Telefon mit einer angegebenen Stelle Kontakt aufnehmen.

Somit ist ein Medium geschaffen, mit dessen Hilfe jeder Fernsehzuschauer, falls er im Besitz eines erfindungsgemäßen Kleingerätes ist, einzeln angesprochen werden kann. Zusätzliche Ein- bzw. Umbauten am Fernsehgerät oder die Kopplung mit Erweiterungsgeräten sind nicht erforderlich. Bei der Ausbildung des erfindungsgemäßen Kleingerätes als Checkkarten-Rechner, ist dieses zudem in großen Stückzahlen bei geringem Preis herzustellen sowie problemlos vom Nutzer zu handhaben. Die vom Sender über das Fernsehgerät ausgesendete Tonfolge kann aus Daten oder Zeichen bestehen, die in Form von Tönen codiert sind.

Wesentlich ist die einmalige Vergabe eines mehrstelligen Identifikationskennzeichens pro Karte. In der vom Fernsehsender ausgegebenen Tonfolge wird eine Zeichenfolge ausgegeben, die mit der Zeichenfolge in einer der Karten übereinstimmt. Wird das gesendete Signal von der Karte als eigenes abgelegtes Identifikationskennzeichen ausgewertet und erkannt, so gibt die Karte über das piezo-elektrische Element 7, das nun als Lautsprecher geschaltet wird, ein Signal, eventuell einen kurzen, in der Karte gespeicherten Text ab, der dem Karteninhaber anzeigt, daß er gewonnen hat. Der Gewinner kann nun im Studio anrufen, seine Addresse bekanntgeben oder sich an der Sendung beteiligen. Bedeutsam ist das im Mikroprozessor 3 abgelegte Programm, das die gesendeten Tonfolgen erkennen und den Inhalt decodieren, diesen mit dem in der Karte gespeicherten Identifikationskennzeichen vergleichen und bei übereinstimmenden Ergebnis ein Tonsignal erzeugen können muß.

Um z.B. zu verhindern, daß auch Nichtgewinner bei dem entsprechenden Sender anrufen, können in der Karte auch Telefonnummern bzw. Anteile von Telefonnummern gespeichert sein, die im Gewinnfall akustisch gesendet werden und somit nur dem tatsächlichen Gewinner die anzuwählende Telefonnummer bekanntgeben. Selbstverständlich ist es auch möglich, die gesendete Zeichenfolge durch einen geeigneten Algorithmus zu verschlüsseln, so daß Manipulierungsversuche, z.B. über Personalcomputer, maßgeblich erschwert sind.

Um dem Sender die Möglichkeit zu geben, einen Anrufer als Inhaber der richtigen, aktivierten Karte zu erkennen, kann zur Absicherung eine Möglichkeit in Form von Daten, Steuerbefehlen oder ähnlichem integriert sein, so daß, wenn der Anrufer während der telefonischen Verbindung seine Karte an das Mikrophon des Telefons hält, ein Signal abgegeben wird, das über das Telefon übertragen wird und als Signal der richtigen Karte identifiziert werden kann.

## Patentansprüche

1. Leicht handhabbares elektronisches Funktionselement oder Kleingerät, insbesondere nach Art einer einen Festwertspeicher umfassenden Karte, Kleinplatte od. dgl. **dadurch gekennzeichnet,** daß das Funktionselement (1) eine integrierte Energiequelle, insbesondere Stromversorgung (4), eine Signalaufnahmeeinheit (5) sowie einen mit letzterer und dem Festwertspeicher (2) geschalteten Mikroprozessor (3) zur Aufnahme und Auswertung aufgenommener Signale bzw. Daten mit im Kleingerät (1) abgelegten Basis-, insbesondere Identifikationsdaten umfaßt.

2. Funktionselement nach Anspruch 1, **dadurch gekennzeichnet,** daß im Funktionselement (1) zusätzlich eine Signalabgabekomponente (6) integriert ist, die bei zumindest teilweiser Übereinstimmung des von der Signalaufnahmeeinheit (5) empfangenen und vom Mikroprozessor (3) ausgewerteten Signals mit dem gespeicherten Basis- bzw. Identifikationskennzeichen ein Signal erzeugt.

3. Funktionselement nach Anspruch 2, **dadurch gekennzeichnet,** daß die Signalabgabekomponente eine Meldeeinrichtung (6) ist.

4. Funtionselement nach einem der Ansprüche 1 bis 3, **dadurch gekennzeichnet,** daß es drahtlos von einem Fernsehgerät gesendete akustische Signale über die als piezo-elektrisches Element (7) ausgebildete Signalaufnahmeeinheit (5) empfängt sowie die empfangenen Signale dem Mikroprozessor (3) zuleitet, und daß dieser die empfangenen, gegebenenfalls codierten Signale mit den gespeicherten Basis- bzw. Identifikationsdaten vergleicht und bei zumindest teilweiser Übereinstimmung des empfangenen Signals mit jenen über das gleichzeitig als Meldeeinrichtung (6) fungierende piezo-elektrische Element (7) ein akustisches Signal erzeugt.

5. Funktionselement nach einem der Ansprüche 2 bis 4, **dadurch gekennzeichnet,** daß die Meldeeinrichtung (6) bei Übereinstimmung von empfangenem Signal mit dem gespeicherten Identifikationskennzeichen eine akustische Information, z.B. eine Telefonnummer, signalisiert.

6. Funktionselement nach einem der Ansprüche 1 bis 5, **dadurch gekennzeichnet,** daß in ihm ein Verstärker (8) integriert ist.

7. Funktionselement nach einem der Ansprüche 1 bis 6, **dadurch gekennzeichnet,** daß es als Checkkarte (1) ausgebildet ist.
